Europäisches Patentamt

European Patent Office

Office européen des brevets

(11) Veröffentlichungsnummer: **0 261 571 B1**

## (12) EUROPÄISCHE PATENTSCHRIFT

(45) Veröffentlichungstag der Patentschrift: **29.01.92**

(51) Int. Cl.⁵: **B62H 5/00**

(21) Anmeldenummer: **87113526.5**

(22) Anmeldetag: **16.09.87**

(54) Vorrichtung zur Sicherung von Fahrzeugen gegen Diebstahl.

(30) Priorität: **26.09.86 DE 3632680**

(43) Veröffentlichungstag der Anmeldung:
**30.03.88 Patentblatt 88/13**

(45) Bekanntmachung des Hinweises auf die
Patenterteilung:
**29.01.92 Patentblatt 92/05**

(84) Benannte Vertragsstaaten:
**AT BE CH DE ES FR GB GR IT LI LU NL SE**

(56) Entgegenhaltungen:
**DE-A- 132 445**
**GB-A- 1 474 834**
**US-A- 2 451 100**
**US-A- 2 574 967**
**US-A- 4 044 577**

(73) Patentinhaber: **Weiss, Heinz**
**Düsseldorfer Strasse 103**
**W-4000 Düsseldorf 11(DE)**

(72) Erfinder: **Weiss, Heinz**
**Düsseldorfer Strasse 103**
**W-4000 Düsseldorf 11(DE)**

(74) Vertreter: **Dipl.-Ing. H. Hauck, Dipl.-Ing. E.
Graalfs, Dipl.-Ing. W. Wehnert, Dr.-Ing. W. Döring**
**Mörikestrasse 18**
**W-4000 Düsseldorf 30(DE)**

## Beschreibung

Die vorliegende Erfindung betrifft eine Vorrichtung zur Sicherung von Fahrzeugen gegen Diebstahl nach dem Oberbegriff des Patentanspruchs 1.

Eine Vorrichtung mit den Merkmalen des Oberbegriffs des Patentanspruchs 1 ist der DE-GM 83 09 318 zu entnehmen. Hiebei weist die bekannte Vorrichtung ein an einem Teil eines Zweirades befestigbares Behältnis auf, das einen Lagerraum für ein flexibles Befestigungselement, das an seinem einen Ende innerhalb des Behältnisses arretiert ist, und eine Öffnung besitzt, aus der im ungebrauchten Zustand das andere Ende des Befestigungselementes herausragt. Bei Benutzung wird das flexible Befestigungselement aus dem Behältnis herausgezogen und im einen geeigneten Gegenstand, wie beispielsweise einen Laternenpfahl, Baum etc., gelegt und dann durch die Öffnung in das Behältnis eingeführt und dort mittels einer Verschlußeinrichtung arretiert. Nach Benutzung wird das Befestigungselement bei der bekannten Vorrichtung entweder durch Schwerkraft, wobei hierfür eine vertikale Anbringung des Behältnisses erforderlich ist, oder durch Aufwickeln auf eine im Lagerraum angeordnete Spule, der ein Antriebsmechanismus zugeordnet ist, in das Behältnis zurückgezogen.

Die vorstehend beschriebene bekannt Vorrichtung weist den Nachteil auf, daß sich hierbei sehr leicht das flexible Befestigungselement, insbesondere wenn dieses als Kette ausgebildet ist, beim Herausziehen aus dem Behältnis bzw. Einziehen in das Behältnis verkanten bzw. verhaken kann und somit eine einwandfreie Funktionsweise der Sicherungsvorrichtung nicht gewährleistet ist. Darüberhinaus erfordert die Ausführungsform, bei der das flexible Befestigungselement durch Schwerkraft in das Behältnis eingezogen wird, eine bestimmte, vertikale Ausrichtung des Lagerraumes, so daß aus diesem Grund die Anwendungsmöglichkeiten eingeschränkt sind. Auch die vorstehend beschriebene zweite Ausführungsform der bekannten Sicherungsvorrichtung weist Nachteile auf, da hierbei ein relativ großvolumiger Lagerraum zur Aufnahme des Befestigungselementes, der Spule und des Aufwikkelmechanismus erforderlich ist. Dies trifft insbesondere dann zu, wenn als flexibles Befestigungselement eine Kette verwendet wird, die im Vergleich zu einem Band beim Aufwickeln auf eine Spule einen relativ großen Platz benötigt.

Der Erfindung liegt die Aufgabe zugrunde, eine Vorrichtung der angegebenen Art zur Verfügung zu stellen, die unter besonderer Berücksichtigung einer kompakten Bauweise besonders störunanfällig zur Sicherung von Fahrzeugen gegen Diebstahl verwendbar ist.

Diese Aufgabe wird erfindungsgemäß durch eine Vorrichtung mit den Merkmalen des Patentanspruchs 1 gelöst.

Die Erfindung beruht auf dem Grundgedanken, das flexible Befestigungselement, bei dem es sich z.B. um ein Seil, Band, eine Kette etc. handelt, nach der Benutzung nicht, wie beim vorstehend aufgeführten Stand der Technik, allein durch Schwerkraft oder durch Aufwickeln auf eine im Lagerraum angeordnete, einen relativ großen Platz beanspruchende Aufwickelspule in das Behältnis zurückzuführen, sondern stattdessen ein angetriebenes Führungs-/Förderrad innerhalb des Behältnisses zwischen der Öffnung und dem Lagerraum vorzusehen, das ein einwandfreies Zurückziehen des flexiblen Befestigungselementes gewährleistet. Hierbei wird das Befestigungselement nicht auf das Führungs-/Förderrad aufgewickelt, sondern umschlingt dieses vielmehr nur um einen bestimmten Umfangswinkel, der abhängig von der Anordnung und Größe des Führungs-/Förderrades sowie der erwünschten Rückzugskraft zwischen etwa $10°$ und etwa $320°$, vorzugsweise zwischen etwa $60°$ und etwa $180°$, liegt.

Die erfindungsgemäß ausgebildete Vorrichtung weist eine Reihe von Vorteilen auf. So wird das flexible Befestigungselement nicht nur beim Einziehen in das Behältnis, sondern auch gleichzeitig beim Herausziehen aus diesem geführt, so daß ein Verkanten, Verklemmen bzw. Verhaken desselben nicht auftreten kann. Da das Befestigungselement beim Einziehen in das Behältnis in den hinter dem Führungs-/Förderrad angeordneten Lagerraum platzsparend abgelegt wird, was im Falle der Verwendung einer Kette als flexibles Befestigungselement beispielsweise durch Ineinanderschieben der einzelnen Kettenglieder oder bei einem flexiblen Band bzw. Seil durch mehrlagiges Übereinander- bzw. Nebeneinanderlegen desselben geschieht, besitzt die erfindungsgemäße Vorrichtung im Vergleich zu der eingangs beschriebenen bekannten Vorrichtung, bei dem eine Aufwickelspule zur Anwendung gelangt, eine wesentlich kleinere Bauweise. Auch ist eine vertikale Anbringung der erfindungsgemäßen Vorrichtung nicht erforderlich, da hierbei das Einziehen des flexiblen Befestigungselementes nicht, wie bei einer Ausführungsform der bekannten Vorrichtung, durch Schwerkraft, sondern über das angetriebene, von dem Befestigungselement teilweise umschlungene Führungs-/Förderrad erfolgt. Hieraus folgt, daß die erfindungsgemäße Vorrichtung in jeder beliebigen Lage am Fahrzeug anbringbar ist, wodurch ihre Verwendungsvielfalt erhöht wird. So kann beispielsweise die erfindungsgemäße Vorrichtung nicht nur zur Sicherung von Zweirädern, wie beispielsweise Fahrrädern, Mofas, Motorrädern etc., sondern auch für Kraftfahrzeuge verwendet werden, wobei hierfür die Vorrichtung beispielsweise unterhalb des Armaturenbrettes derartangeordnet wird, daß sich das aus dem Behältnis herausgezogene flexible Befestigungselement zwischen dem Lenkrad des Kraftfahrzeuges und dem Brems- und/oder Kupplungpedal erstreckt und somit ein Bewegen des Lenkrades und der Pedalen verhindert. Auch ist es desweiteren möglich, mit der erfindungsgemäßen Vorrichtung Wasserfahrzeuge, wie beispielsweise Surfbretter, Segel-, Motorboote etc., zu sichern, wobei hierbei entweder ein für den Betrieb der Wasserfahrzeuge erforderliches bewegliches Teil, wie beispielsweise der Mastbaum oder die Ruderpinne, durch das flexible Befestigungselement in seinen Bewegung eingeschränkt bzw. arretiert wird oder das flexible Befestigungselement um einen Pfahl o. ä. gelegt und anschließend an der Vorrichtung durch die Verriegelungseinrichtung unlösbar befestigt wird.

Um eine besonders kompakte Bauweise der erfindungsgemässen Vorrichtung zu erreichen, sieht eine Ausführungsform vor, daß das angetriebene Führungs-/Förderrad unmittelbar hinter der Öffnung angeordnet ist, durch die das flexible Befestigungselement aus dem Behältnis herausziehbar ist. Eine derartige Ausführungsform weist zudem noch den Vorteil auf, daß hierbei wegen der relativ kurzen Entfernung zwischen der Öffnung und dem Führungs-/Förderrad ein besonders gutes Führen des Befestigungselementes gewährleistet ist, so daß sich dieses beim Herausziehen bzw. Einziehen in das Behältnis nicht verkanten oder verklemmen kann.

Der Antrieb des Führungs-/Förderrades bei der erfindungsgemäßen Vorrichtung kann verschieden ausgebildet sein. So sieht beispielsweise eine weitere Ausführungsform der Vorrichtung vor, daß das Führungs-/Förderrad durch eine Feder, wie z.B. Spiralfeder, derart vorgespannt ist, daß es das flexible Befestigungselement in das Behältnis einzieht. Bei jedem Herausziehen des Befestigungselementes aus dem Behältnis wird infolge des Eingriffes des Befestigungselementes mit dem Führungs-/Förderrad dieses gedreht und somit die an dem Führungs-/Förderrad angeordnete Spiralfeder erneut gespannt. Selbstverständlich ist es möglich, anstelle der Feder andere elastische Elemente, die beispielsweise durch Verdrehen das Führungs-/Förderrad vorspannen, an diesem vorzusehen. Hierfür können beispielsweise als elastische Elemente gummielastische Kunststoffe, wie beispielsweise Polyurethane, oder Gummi verwendet werden, wobei diese mit ihrer einen Seite an dem Führungs-/Förderrad und mit der hierzu entgegengesetzten Seite an einem Abschnitt des Behältnisses befestigt sind, um so bei einer Drehung des Führungs-/Förderrades, was durch das Herausziehen das Befestigungselementes geschieht, ebenfalls verdreht zu werden und somit das Führungs-/Förderrad entgegengesetzt zu dieser Drehung vorzuspannen. Ebenso ist es natürlich auch möglich, das Führungs-/Förderrad durch einen entsprechenden Elektromotor oder mittels einer außen am Behältnis angeordneten Kurbel manuell anzutreiben, wobei hierdurch sowohl das Herausführen des flexiblen Befestigungselementes aus dem Behältnis als auch das Einführen desselben in das Behältnis bewirkt werden kann.

Bei einer besonders geeigneten Ausführungsform der erfindungsgemäßen Vorrichtung ist das flexible Befestigungselement als Kette ausgebildet, die abwechselnd waagerechte und senkrechte Glieder aufweist. Eine derartige Kette, die üblicherweise aus gehärtetem Stahl besteht und auch als Panzerkette bezeichnet wird, besitzt neben dem Vorteil, daß sie mit den üblichen Kneifzangen, Seitenschneidern und Sägewerkzeugen nur sehr zeitaufwendig zerstört werden kann, noch den Vorzug, daß sie im Vergleich beispielsweise zu einem entsprechenden Drahtseil von gleicher Stabilität auf einen wesentlich kleineren Raum zusammenschiebbar ist. Dies hat zur Folge, daß bei einer mit einer derartigen Kette versehenen Vorrichtung der Lagerraum für das flexible Befestigungselement auch ein entsprechend kleineres Volumen aufweisen muß, so daß eine derartige Vorrichtung auch eine sehr kompakte Bauweise aufweist. So besitzt beispielsweise eine Ausführungsform der erfindungsgemäßen Vorrichtung, bei der die Kette zwischen etwa 150 cm und etwa 200 cm lang ist, eine Breite von etwa 3 cm, eine Höhe von etwa 10 cm und eine Länge von etwa 15 cm. Hierbei haben die einzelnen Kettenglieder eine Materialstärke zwischen etwa 4 mm und etwa 7 mm, vorzugsweise etwa 5 mm, und eine Länge zwischen etwa 12 mm und etwa 18 mm, vorzugsweise etwa 15 mm.

Um bei der vorstehend beschriebenen Ausführungsform, bei der das flexible Befestigungselement als Kette ausgebildet ist, ein besonders gutes Führen und Fördern derselben durch das Führungs-/Förderrad zu gewährleisten, ist dieses als Zahnrad ausgebildet, wobei die einzelnen Zähne des Zahnrades zur Aufnahme der waagerechten Kettenglieder dienen. Zusätzlich sind zwischen den Zähnen des Zahnrades Ausnehmungen vorgesehen, die in ihrer Form und Größe an die senkrechten Kettenglieder angepaßt sind, so daß diese die senkrechen Kettenglieder beim Umlenken der Kette um das Führungs-/Förderrad aufnehmen und haltern. Da sich die zwischen den Zähnen des Führungs-/Förderrades angeordneten Ausnehmungen nicht über dessen gesamte Dicke erstreckten, weisen die Ausnehmungen somit zwei gegenüberliegende Wandabschnitte auf, die ein seitliches Verrutschen der Kette von dem Führungs-/Förderrad verhindern und ein Verkanten bzw. Verklemmen der Kette unmöglich machen.

Eine weitere Ausführungsform der erfindungsgemäßen Vorrichtung sieht vor, daß dem vorstehend beschriebenen und als Zahnrad ausgebildeten Führungs-/Förderrad ein Führungselement zugeordnet ist, das oberhalb des Zahnrades angeordnet ist. Hierbei bewirkt dieses Führungselement, daß die Kette beim Herausziehen aus dem Behältnis oder beim Einziehen in dasselbe seitlich geführt wird und somit in jedem Fall mit dem Führungs-/Förderrad in Eingriff tritt. Vorzugsweise besteht dieses Führungselement aus einer Nut, die in einem oberhalb des Zahnrades befindlichen Behältnisabschnitt vorgesehen ist, wobei sich dieser Behältnisabschnitt insbesondere über einen gewissen Umfangswinkel des Führungs-/Förderrades bogenförmig erstreckt. Die Nut dient dabei zur Aufnahme des oberen Teiles der senkrechten Glieder der Kette und weist im Einlaß- und Auslaßbereich einen größeren Abstand zum Führungs-/Förderrad auf als in ihrer Mitte, so daß hierdurch das Auflegen der Kette sowohl beim Einziehen als auch beim Herausziehen derselben erleichtert wird. Selbstverständlich ist es möglich, auch bei den Ausführungsformen der erfindungsgemäßen Vorrichtung, bei denen das flexible Befestigungselement beispielsweise aus einem Seil oder Band besteht, ein entsprechend geformtes Führungselement oberhalb des Führungs-/Förderrades vorzusehen.

Um eine Ausrichtung der waagerechten und senkrechten Glieder der Kette zu erreichen, sieht eine andere Ausführungsform der erfindungsgemäßen Vorrichtung vor, daß die Öffnung, durch die die Kette aus dem Behältnis herausgeführt bzw. in dieses eingeführt wird, als Kreuzschlitz ausgebildet ist. Aus dem gleichen Grund kann sich ein kreuzschlitzförmiger Führungskanal für die Kette von der Öffnung bis zum Führungs-/Förderrad erstrekken, wodurch das Auflegen der Kette auf das als Zahnrad ausgebildete Führungs-/Förderrad erleichtert wird. Selbstverständlich ist es auch möglich, zwischen Lagerraum und Zahnrad zusätzlich noch einen zweiten kreuzschlitzförmigen Führungskanal vorzusehen.

Um das bei der Benutzung der Vorrichtung herausgezogene flexible Befestigungselement an dem Behälter zu befestigen, kann grundsätzlich jede Verriegelungseinrichtung verwendet werden. So ist es beispielsweise möglich, an den aus dem Behältnis herausragenden Ende des flexiblen Befestigungselementes ein Bügelschloß vorzusehen, dessen Bügel um ein geeignetes Fahrzeugteil, wie beispielsweise bei Zweirädern um einen Rahmenrohrabschnitt oder um eine Speiche, gelegt und anschließend durch Einschieben in den Schließmechanismus arretiert wird. Ist als flexibles Befestigungselement eine Kette vorgesehen, so sieht eine bevorzugte Ausführungsform der erfindungsgemäßen Vorrichtung vor, daß die Kette an ihrem aus dem Behältnis herausragenden Ende einen Verriegelungsdorn aufweist, der in eine am Behältnis vorgesehene Aufnahmeeinrichtung einsteckbar und dort über den der Aufnahmeeinrichtung zugeordneten Schloßmechanismus abschließbar ist. Soll zudem noch bei einer derartigen Ausführungsform die Länge der Kette variabel sein, so empfiehlt es sich, den vorstehend beschriebenen Verriegelungsdorn derart auszubilden, daß er in jedes beliebiges Kettenglied einsteckbar ist. Dies kann beispielsweise dadurch erreicht werden, daß der Verriegelungsdorn konisch ausgebildet ist und mit seinem verjüngten Ende in die Aufnahmeeinrichtung gesteckt und dort verriegelt wird, während der vergrößerte Abschnitt des Verriegelungsdornes ein Herabziehen der Kette vom Verriegelungsdorn verhindert.

Auch ist eine Ausführungsform der erfindungsgemäßen Vorrichtung denkbar, bei der diese keine Verriegelungseinrichtung aufweist. Hierbei wird bei der Benutzung das als Kette ausgebildete Befestigungselement aus dem Behältnis herausgezogen und um einen geeigneten Gegenstand, wie beispielsweise einen Laternenpfahl, Baum o. ä., gelegt und danach das Kettenende ggf. zusätzlich um ein geeignetes Fahrzeugteil geführt und über ein geeignetes Schloß, wie beispielsweise ein übliches Bügelschloß, an einem beliebigen Kettenglied derart arretiert, daß das Fahrzeug gegen Diebstahl gesichert ist.

Die Form des Behältnisses der erfindungsgemäßen Vorrichtung spielt grundsätzlich keine Rolle und richtet sich nach der Länge und Auswahl des flexiblen Befestigungselementes. In der Regel empfiehlt es sich, das Behältnis so auszubilden, daß es sich möglichst eng an das entsprechende Fahrzeugteil anpaßt und so nicht als störend empfunden wird. Es versteht sich, daß das Behältnis selbst diebstahlsicher am Fahrzeug angebracht sein muß. Dies kann beispielsweise durch Schweißen erfolgen, wenn das Behältnis aus Metall ausgebildet ist. Für Kunststoffbehältnisse, die beispielsweise an runden Rahmenteilen von Zweirädern befestigt werden, können Schellen verwendet werden, die die Rahmenteile umgreifen. Hierbei sind die Schellen in das Innere des Behältnisses eingeführt und werden dort mit dem Behältnis, beispielsweise durch Schrauben, derart verbunden, daß die Schellen nur über einen im Behältnis vorgesehenen verschließbaren Deckel erreichbar und lösbar sind.

Auch kann das Behältnis mit bandförmigen Verstärkungselementen, insbesondere aus Metall, versehen sein, die das Behältnis umgreifen und insbesondere bei Kunststoffbehältnissen verhindern, daß diese unbefugt aufgebrochen werden. Ferner können diese Verstärkungselemente zur sicheren Anbringung der Verriegelungseinrichtung und/oder zur Befestigung des Behältnisses an dem Fahrzeug dienen.

Vorzugsweise sind das flexible Befestigungselement, die Innenwände des Lagerraumes, das Führungs-/Förderrad, die Öffnung sowie eventuell vorhandene Führungskanäle mit einem Kunststoffüberzug versehen, um so eine unerwünschte übermäßige Geräuschbildung beim Herausziehen des flexiblen Befestigungselementes aus dem Lagerraum zu vermeiden. Selbstverständlich ist es auch möglich, das Führungs-/Förderrad, die Führungskanäle und Führungselemente selbst aus Kunststoff anzufertigen.

Bezüglich der Befestigung des arretierten Endes des Befestigungselementes ist allgemein festzuhalten, daß hierfür jede Befestigungsart geeignet ist, die ein unbefugtes Lösen des arretierten Endes des Befestigungselementes verhindert. So kann beispielsweise das Befestigungselement über geeignete Befestigungsmittel, wie beispielsweise Schrauben, Schweißen o. dlg., innerhalb des Behältnisses arretiert sein. Auch ist es möglich, das Ende des Befestigungselementes an der Verriegelungseinrichtung zu befestigen, so daß bei einer Benutzung selbst nach Zerstörung des Behältnisses die erfindungsgemäße Vorrichtung das Fahrzeug wirksam gegen Diebstahl sichert, da das herausragende Ende des Befestigungselementes ebenfalls durch die Verriegelungseinrichtung arretiert ist und somit ein geschlossener Kreis des Befestigungselementes entsteht. Ebenso ist es denkbar, das arretierte Ende des Befestigungselementes an einem geeigneten Fahrzeugteil, beispielsweise bei Zweirädern an einem Rahmenteil, unlösbar anzuordnen.

Eine besonders geeignete Ausführungsform der erfindungsgemäßen Vorrichtung weist ein hinreichend langes Befestigungselement auf, so daß diese bei der Benutzung nicht nur um einen entsprechenden Gegenstand, wie beispielsweise Baum oder Laternenpfahl, sondern auch zusätzlich noch um ein oder mehrere bewegliche Fahrzeugteile einmal oder mehrfach gelegt werden kann. Hierdurch wird sichergestellt, daß nur durch Zerstörung des Befestigungselementes oder der Verriegelungseinrichtung das Fahrzeug gestohlen werden kann, was mit einem erheblichen Aufwand verbunden ist.

Auch kann die erfindungsgemäße Vorrichtung mit einer Arretierungseinrichtung für das Befestigungselement versehen sein, die derart angeordnet und ausgebildet ist, daß sie das Befestigungselement beim Herausziehen bei einer gewünschten Länge arretiert. Eine derartige Arretierung kann beispielsweise dadurch erreicht werden, daß dem Befestigungselement eine Rolle zugeordnet ist, die derart angeordnet und über eine Feder vorgespannt ist, daß sie ein ungehindertes Herausziehen des Befestigungselementes aus dem Behältnis erlaubt und durch Klemmeingriff ein Zurückziehen des Befestigungselementes in das Behältnis verhindert. Wird beispielsweise das Befestigungselement als Kette ausgebildet, so kann die Arretierungseinrichtung aus einer von einem Hebel gelagerten Rolle bestehen, die in Kontakt mit den waagerechten Kettengliedern steht. Hierbei ist der Hebel der Rolle derart vorgespannt, daß bei Herausziehen der Kette diese nicht arretiert wird, während beim Einziehen der Kette der federvorgespannte Hebel verschwenkt und ein Einrücken der Rolle in das jeweilige waagerechte Kettenglied bewirkt und somit die Kette in der entsprechenden Position arretiert wird. Um eine derartige Arretierung zu lösen und somit die Kette in das Behhältnis zurückzuführen, wird eine der Arretierungseinrichtung zugeordnete Betätigungseinrichtung gezogen, die ein Verschwenken des Hebels aus der Bewegungsbahn der Kette herbeiführt.

Auch kann bei einer anderen Ausführungsform der erfindungsgemäßen Vorrichtung anstelle des vorstehend beschriebenen Zahnrades ein Führungs-/Förderrad verwendet werden, das über seinen Umfang gesehen abwechselnd Vertiefungen und Aussparungen aufweist. Hierbei gehen die Vertiefungen über die Dicke des Führungs-/Förderrades und dienen zur Aufnahme der waagerechten Kettenglieder, während die Aussparungen die senkrechten Kettenglieder aufnehmen. Bedingt durch eine unterschiedliche Tiefe der Vertiefungen und Aussparungen wird die Kette sicher an einem derartigen Führungs-/Förderrad geführt und gehaltert. Ebenso ist es möglich, Aussparungen vorzusehen, die gegenüberliegende erhöhte Seitenwandabschnitte besitzen. Hierbei stoßen Abschnitte der waagerechten Kettenglieder an diese erhöhten Seitenwandabschnitte, so daß die Kette sicher am Führungs-/Förderrad gehaltert wird.

Eine besonders geeignete Lagerung für das Führungs-/Förderrad sieht vor, daß dieses von einer fest am Behältnis angeordneten Achse drehbar gelagert wird. Hierbei ist eine Spiralfeder mit einem Ende an der Achse befestigt, während das andere Ende der Spiralfeder am Führungs-/Förderrad arretiert ist, so daß beim Herausziehen des Befestigungselementes die Spiralfeder vorgespannt wird.

Vorteilhafte Weiterbildungen der erfindungsgemäßen Vorrichtung sind in den Unteransprüchen angegeben.

Die erfindungsgemäße Vorrichtung wird nunmehr anhand von Ausführungsbeispielen in Verbindung mit der Zeichnung näher erläutert. Es zeigen:

Figur 1  eine schematische perspektivische Seitenansicht der Vorrichtung, bei der ein Teil der Seitenwand herausgebrochen ist;

Figur 2  eine Vorderansicht der in Figur 1 abgebildeten Vorrichtung;

Figur 3  eine Vorderteilansicht einer ersten Ausführungsform eines als Zahnrad ausgebilden Führungs-/Förderrades;

Figur 4 eine Seitenansicht des in Figur 3 abgebildeten Führungs-/Förderrades; und

Figur 5 eine vordere Teilansicht einer zweiten Ausführungsform des Führungs-/Förderrades.

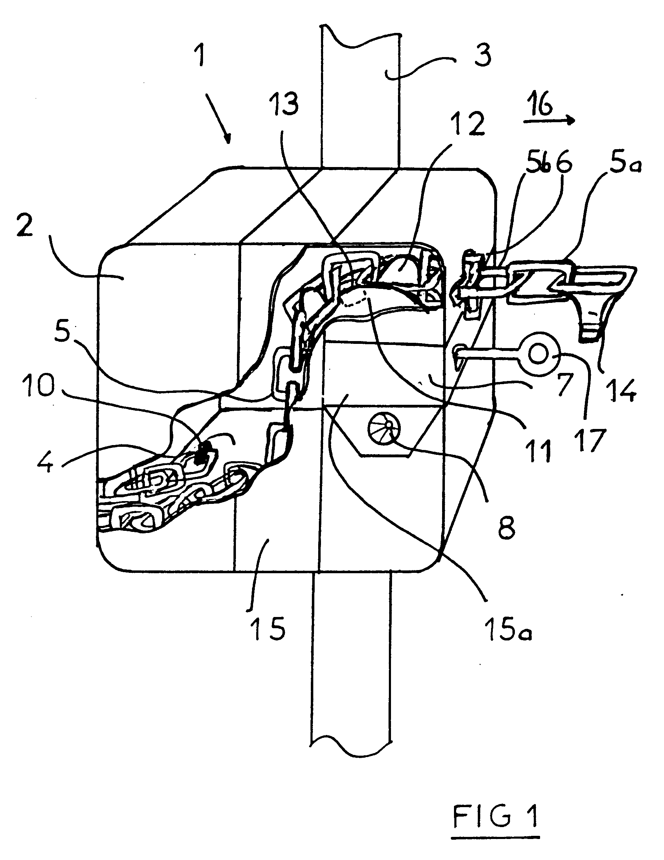

Eine in Figur 1 gezeigte und insgesamte mit 1 bezeichnete Vorrichtung zur Sicherung von Fahrzeugen gegen Diebstahl besitzt ein Behältnis 2, das über geeignete Mittel, beispielsweise durch Schweißen oder Verschrauben, unlösbar an einem Teil 3 eines Fahrzeuges befestigbar ist. Innerhalb des Behältnisses 2 ist ein Lagerraum 4 für ein flexibles Befestigungselement 5 vorgesehen, das bei der in Figur 1 gezeigten Ausführungsform aus einer Kette besteht. Hierbei weist diese Kette abwechselnd senkrechte und waagerechte Kettenglieder 5a bzw. 5b auf.

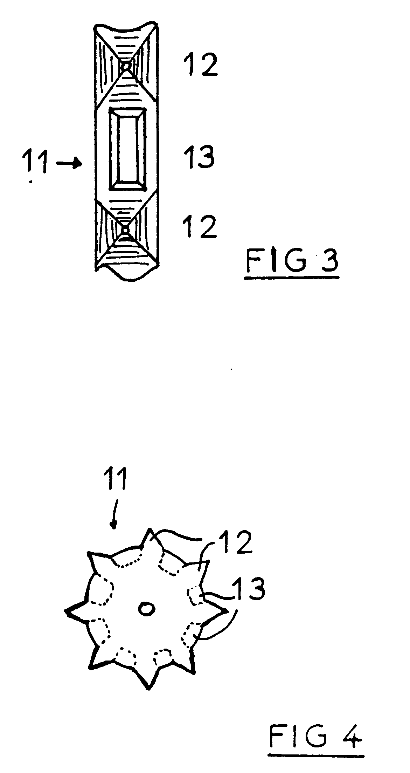

Die Kette ragt aus einer im Behältnis vorgesehenen Öffnung 6 heraus und ist bei Benutzung der Vorrichtung aus dem Behältnis 2 herausziehbar und nach Benutzung wieder in das Behältnis einziehbar. An seinem hierzu entgegengesetzten Ende ist das Befestigungselement bei der gezeigten Ausführungsform über ein geeignetes Arretierungsmittel 10, beispielsweise über eine nur von innen zugängliche Schraube, am Behältnis befestigt. Zwischen der Öffnung 6 und dem Lagerraum 4 ist ein Führungs-/Förderrad 11 für das Befestigungselement 5 angeordnet. Bei der abgebildeten Ausführungsform besteht das Führungs-/Förderrad 11 aus einem Zahnrad, das über eine nicht gezeigte Feder derart vorgespannt ist, daß es die herausgezogene Kette nach der Benutzung wieder in das Behältnis einzieht. Das Zahnrad besitzt eine Vielzahl von Zähnen 12 zur Aufnahme der waagerechten Kettenglider 5b sowie zwischen benachbarten Zähnen angeordnete Ausnehmungen 13, die in ihrer Größe an die senkrechten Kettenglieder 5a angepaßt sind und zur Aufnahme und Halterung der senkrechten Kettenglieder verwendet werden wie dies noch nachfolgend bei den Figuren 3 und 4 beschrieben wird. Außen am Behältnis 2 ist eine insgesamt mit 7 bezeichnete Verriegelungseinrichtung für das Befestigungselement 5 vorgesehen, die eine als Bohrung ausgebildete Aufnahmeeinrichtung 8 aufweist, in die ein an dem herausragenden Ende des Befestigungselementes angeordneter Verriegelungsdorn 14 einschiebbar und arretierbar ist. Um ein unerwünschtes Zerstören des Behältnisses 2 zu verhindern, besitzt dieses bandförmige Verstärkungselemente 15 aus Metall. Gleichzeitig dient ein bandförmiges Verstärkungselement 15a zur Aufnahme der Verriegelungseinrichtung 7.

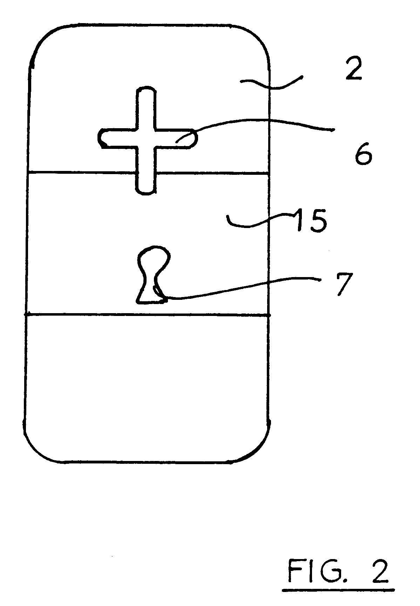

Wie insbesondere der Figur 2 zu entnehmen ist, ist bei der gezeigten Ausführungsform die Öffnung 6 kreuzschlitzförmig ausgebildet. Hierdurch wird erreicht, daß die einzelnen waagerechten und senkrechten Glieder der nicht gezeigten Kette beim Herausziehen aus dem Behältnis 2 und insbesondere beim Einziehen in dasselbe derart ausgerichtet werden, daß sie einwandfrei von den Zähnen 12 bzw. den Ausnehmungen 13 des Führungs-/Förderrades 11 aufgenommen werden.

Wie am besten die Figuren 3 und 4 zeigen, besitzt das Führungs-/Förderrad 11 eine Vielzahl von Zähnen 12 sowie dazwischen angeordnete Ausnehmungen 13, die sich nicht über die gesamte Dicke des Führungs-/Förderrades erstrecken. Während des Transportes der Kette beim herausziehen aus dem Behältnis bzw. beim Einziehen in dasselbe werden die waagerechten Kettenglieder 5b von den Zähnen 12 und die senkrechten Kettenglieder 5a von den Ausnehmungen 13 gehalten, so daß ein seitliches Verrutschen und insbesondere ein Abrutschen der Kette vom Führungs-/Förderrad und ein Verkanten bzw. Verklemmen derselben unmöglich wird.

Die vorstehend beschriebene Ausführungsform funktioniert wie folgt:
Zunächst wird die Vorrichtung 1 über geeignete Befestigungselemente unlösbar mit einem Teil 3 des Fahrzeuges verbunden. Innerhalb des Behältnisses 2 ist bei der vorstehend beschriebenen Ausführungsform eine Kette angeordnet, deren Länge je nach Verwendungszweck zwischen etwa 100 cm und 200 cm beträgt. Hierbei ist die Kette mit ihrem einen Ende innerhalb des Lagerraumes arretiert und ragt mit ihrem entgegengesetzten Ende geringfügig aus dem Behältnis hervor, so daß sie leicht aus diesem in Pfeilrichtung 16 herausgezogen werden kann. Um nunmehr das Fahrzeug gegen Diebstahl zu sichern, wird die Kette aus dem Behältnis herausgezogen und um einen geeigneten Gegenstand, wie beispielsweise einen Baum etc., gelegt und anschließend der Verriegelungsdorn 14 in die Aufnahmeeinrichtung 8 eingesteckt und dort durch Drehen eines Schlüssels 17 der Verriegelungseinrichtung 7 unlösbar arretiert. Nur durch den Schlüssel 17 kann der Verriegelungsdorn 14 wieder gelöst werden, worauf die Kette durch das durch die Feder angetriebene Führungs-/Förderrad 11 in das Behältnis 2 eingezogen wird und platzsparend im Lagerraum 4 des Behältnisses durch Übereinanderschieben der Kettenglieder zusammenfällt.

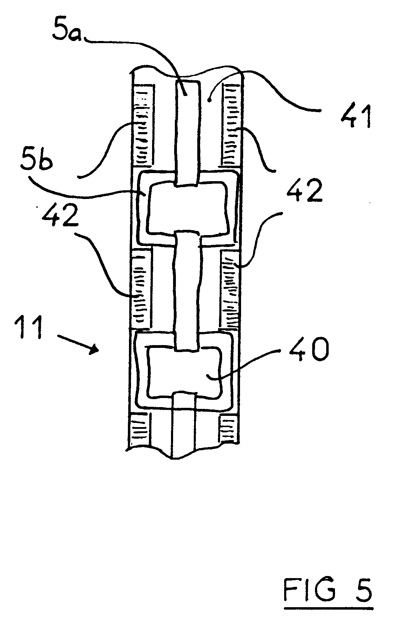

In Figur 5 ist eine weitere Ausführungsform des Führungs-/Förderrades 11 dargestellt. Hierbei weist dieses Führungs-/Förderrad abwechselnd Vertiefungen 40 sowie Aussparungen 41 auf, wobei die Vertiefungen 40 zur Aufnahme der waagerechten Kettenglieder 5b und die Aussparungen 41 zur Aufnahme der senkrechten Kettenglieder 5a dienen. Die Vertiefungen 40 sowie Aussparungen 41 sind in ihrer Größe an die Größe der Kettenglieder angepaßt. Bei der in Figur 5 gezeigten Ausführungsform weist jede Aussparung 41 gegenüberliegende erhöhte Seitenwandabschnitte 42 auf, an die Abschnitte der waagerechten Kettenglieder stoßen, wodurch die Kette einwandfrei am Führungs-/Förderrad 11 geführt und gehaltert wird.

Bei einer nicht gezeigten Ausführungsform sind die von außen zugänglichen Teile der Verriegelungseinrichtung bzw. des Schlosses und der Betätigungseinrichtung für die Arretierungseinrichtung durch eine Kappe, die ggf. bei Benutzung weggeklappt werden kann, abgedeckt. Hierbei dient die Abdeckung als zusätzlicher Schutz und verhindert gleichzeitig ein Verschmutzen bzw. Feuchtwerden bei Regen. Sie dient ferner als Schutz gegen mögliche Verletzungen.

## Patentansprüche

1. Vorrichtung zur Sicherung von Fahrzeugen, insbesondere Zweirädern, gegen Diebstahl mit einer Verriegelungseinrichtung für ein flexibles Befestigungselement und einem am Fahrzeug befestigbaren Behältnis, das einen Lagerraum für das an einem Ende im Behältnis, an der Verriegelungseinrichtung und/oder dem Fahrzeug arretierte Befestigungselement sowie eine Öffnung für dieses aufweist, aus der das Befestigungselement im ungebrauchten Zustand herausragt und durch die dieses bei Benutzung aus dem Behältnis herausziehbar und nach Benutzung wieder in das Behältnis einziehbar ist, dadurch gekennzeichnet, daß das Behältnis (2) zwischen der Öffnung (6) und dem Lagerraum (4) mit einem angetriebenen Führungs-/Förderrad (11) für das Befestigungselement (5) versehen ist.

2. Vorrichtung nach Anspruch 1, dadurch gekennzeichnet, daß das angetriebene Führungs-/Förderrad (11) unmittelbar hinter der Öffnung (6) vorgesehen ist.

3. Vorrichtung nach Anspruch 1 oder 2, dadurch gekennzeichnet, daß das angetriebene Führungs-/Förderrad (11) über eine Feder derart vorgespannt ist, daß es das Befestigungselement (5) in das Behältnis (2) einzieht.

4. Vorrichtung nach Anspruch 1 oder 2, dadurch gekennzeichnet, daß dem angetriebenen Führungs-/Förderrad (11) eine außen am Behältnis (2) vorgesehene Kurbel zugeordnet ist.

5. Vorrichtung nach einem der vorangehenden Ansprüche, dadurch gekennzeichnet, daß das Befestigungselement (5) als Kette ausgebildet ist, die abwechselnd waagerechte (5b) und senkrechte (5a) Glieder aufweist.

6. Vorrichtung nach Anspruch 5, dadurch gekennzeichnet, daß das angetriebene Führungs-/Förderrad (11) als Zahnrad ausgebildet ist, das mit einer Vielzahl von Ausnehmungen (13) versehen ist, die jeweils zwischen benachbarten Zähnen (12) angeordnet sind.

7. Vorrichtung nach Anspruch 6, dadurch gekennzeichnet, daß dem Zahnrad ein oberhalb desselben angeordnetes Führungselement für die Kette zugeordnet ist.

8. Vorrichtung nach Anspruch 7, dadurch gekennzeichnet, daß das Führungselement als Nut ausgebildet ist, die in einem oberhalb des Zahnrades befindlichen Behälterabschnitt vorgesehen ist.

9. Vorrichtung nach einem der Ansprüche 5 bis 8, dadurch gekennzeichnet, daß das Behältnis (2) eine kreuzschlitzförmige Öffnung (6) für die Kette aufweist.

10. Vorrichtung nach Anspruch 9, dadurch gekennzeichnet, daß sich ein kreuzschlitzförmiger Führungskanal für die Kette von der Öffnung (6) bis zum Führungs-/Förderrad (11) erstreckt.

11. Vorrichtung nach einem der vorangehenden Ansprüche, dadurch gekennzeichnet, daß das Befestigungselement (5) an seinem einen Ende innerhalb des Behältnisses (2) arretiert und an seinem anderen Ende mit einem Verriegelungsdorn (14) versehen ist und daß das Behältnis (2) eine der Verriegelungseinrichtung (7) zugeordnete Aufnahmeeinrichtung (8) aufweist, in die der Verriegelungsdorn (14) einsteckbar und arretierbar ist.

12. Vorrichtung nach einem der vorangehenden Ansprüche, dadurch gekennzeichnet, daß das Behältnis (2) von außen unlösbar an einem Teil (3) eines Fahrzeuges anbringbar ist.

13. Vorrichtung nach einem der vorangehenden Ansprüche, dadurch gekennzeichnet, daß das Behältnis (2) bandförmige Verstärkungselemente (15), insbesondere aus Metall, aufweist.

14. Vorrichtung nach den Ansprüchen 11 und 13, dadurch gekennzeichnet, daß die Verriegelungseinrichtung (7) und die Aufnahmeeinrichtung (8) für den Verriegelungsdorn (14) an einem der bandförmigen Verstärkungselemente (15) angeordnet sind.

**15.** Vorrichtung nach einem der vorangehenden Ansprüche, dadurch gekennzeichnet, daß das Behältnis (2) durch einschraubbare, jedoch nicht abschraubbare Schrauben unlösbar am Fahrzeug befestigt ist.

**16.** Vorrichtung nach einem der Ansprüche 1 - 13, bei der die Verriegelungseinrichtung als Schloß ausgebildet ist, an dem das eine Ende des flexiblen Befestigungselementes arretiert und durch das das andere Ende des Befestigungselementes bei Benutzung arretierbar ist, dadurch gekennzeichnet, daß das Schloß unlösbar an einem Teil des Fahrzeuges angeordnet ist.

**17.** Vorrichtung nach Anspruch 5, dadurch gekennzeichnet, daß das angetriebene Führungs-/Förderrad (11) abwechselnd eine über die Dicke desselben gehende Vertiefung (40) zur Aufnahme der waagerechten Kettenglieder (5b) und eine Aussparung (41) zur Aufnahme der senkrechten Kettenglieder (5a) aufweist.

**18.** Vorrichtung nach Anspruch 17, dadurch gekennzeichnet, daß die Aussparung (41) des Führungs-/Förderrades (11) gegenüberliegende erhöhte Seitenwandabschnitte (42) aufweist.

**19.** Vorrichtung nach einem der vorangehenden Ansprüche, dadurch gekennezeichnet, daß dem flexiblen Befestigungselement (5) eine Arretierungseinrichtung zugeordnet ist, die das Befestigungselement beim Herausziehen bei einer gewünschten Länge festlegt.

**20.** Vorrichtung nach Anspruch 19, dadurch gekennzeichnet, daß die Arretierungsvorrichtung aus einem mit einer Rolle versehene Hebel besteht, der derart angeordnet und über eine Feder vorgespannt ist, daß er ein freies Herausziehen des Befestigungselementes aus dem Behältnis erlaubt und nur beim Zurückziehen des Befestigungselementes in das Behältnis dieses durch Klemmeingriff festsetzt.

**21.** Vorrichtung nach Anspruch 20, dadurch gekennzeichnet, daß die Arretierungseinrichtung durch Ziehen einer außen am Behältnis angeordneten Betätigungseinrichtung aus dem Klemmeingriff mit dem Befestigungselement lösbar ist.

**Claims**

**1.** A device for making vehicles, especially two-wheelers, burglar-proof, said device comprising locking means for a flexible securing member and a container adapted to be fastened to the vehicle which has a storage room for the securing member fixed at one end in the container, at the locking means and/or the vehicle as well as an opening for the securing member from which the same protrudes in the non-used condition and through which the same is adapted to be removed upon use and to be drawn into the container after use, characterized in that said container (2) is provided with a driven guide/conveyor wheel (11) for said securing member (5) between said opening (6) and said storage room (4).

**2.** The device according to claim 1, characterized in that the driven guide/conveyor wheel (11) is located directly behind said opening (6).

**3.** The device according to claim 1 or 2, characterized in that the driven guide/conveyor wheel (11) is biased by means of a spring such that it draws the securing member (5) into the container (2).

**4.** The device according to claim 1 or 2, characterized in that the driven guide/conveyor wheel (11) is associated with a crank provided at the outside of the container (2).

**5.** The device according to one of the preceding claims, characterized in that the securing member (5) is a chain which has alternately horizontal (5b) and vertical (5a) links.

**6.** The device according to claim 5, characterized in that said driven guide/conveyor wheel (11) is a gearwheel which is provided with a plurality of recesses (13) which are located between adjacent teeth (12), respectively.

**7.** The device according to claim 6, characterized in that said gearwheel is associated with a guide member for the chain located above said gearwheel.

**8.** The device according to claim 7, characterized in that said guide member is designed as groove which is provided in a container portion located above the gearwheel.

**9.** The device according to one of the claims 5 to 8, characterized in that said container (2) has a cross-slot-like opening (6) for said chain.

**10.** The device according to claim 9, characterized in that a cross-slot-like guide channel for the chain extends from said opening (6) to said guide/conveyor wheel (11).

11. The device according to one of the preceding claims, characterized in that said securing member (5) is fixed at its one end within the container (2) and is provided at its other end with a locking mandrel (14), and in that said container (2) includes reception means (8) associated with said locking means (7) into which the locking mandrel (14) is insertable and lockable.

12. The device according to one of the preceding claims, characterized in that said container (2) is adapted to be mounted from outside at a part (3) of a vehicle in an undetachable manner.

13. The device according to one of the preceding claims, characterized in that said container (2) includes tapelike strengthening members (15), especially of metal.

14. The device according to the claims 11 and 13, characterized in that said locking means (7) and said reception means (8) for said locking mandrel (14) are positioned at one of said tape-like strengthening members (15).

15. The device according to one of the preceding claims, characterized in that said container (2) is fastened to the vehicle in an undetachable manner by means of screws which can be screwed in but not screwed off.

16. The device according to one of the claims 1 to 13 according to which the locking means is a lock at which the one end of said flexible securing member is fixed and through which the other end of said securing member is lockable upon use, characterized in that the lock is positioned at a part of the vehicle in an undetachable manner.

17. The device according to claim 5, characterized in that said driven guide/conveyor wheel (11) alternately includes a depression (40) extending over the thickness thereof for reception of the horizontal chain links (5b) and a recess (41) for the reception of the vertical chain links (5a).

18. The device according to claim 17, characterized in that the recess (41) of said guide/conveyor wheel (11) has opposite raised side wall portions (42).

19. The device according to one of the preceding claims, characterized in that the flexible securing member (5) is associated with locking means fixing said securing member during removal at a desired length.

20. The device according to claim 19, characterized in that said locking means consists of a lever provided with a roller, said lever being positioned such and biased by a spring that it allows free removal of the securing member from the container and only during drawing the securing member back into the container fixes the same by clamping engagement.

21. The device according to claim 20, characterized in that said locking means is adapted to be detached from the clamping engagement with the securing member by means of an actuation means positioned at the outside of said container.

**Revendications**

1. Dispositif de protection contre le vol de véhicules, en particulier de véhicules à deux roues, avec un dispositif de verrouillage d'un élément de fixation flexible et un boîtier qui peut être fixé au véhicule, qui présente pour l'élément de fixation accroché au dispositif de verrouillage et/ou au véhicule un espace de réception ainsi qu'une ouverture hors de laquelle l'élément de fixation déborde dans sa position de non-utilisation et à travers laquelle cet élément peut lors de son utilisation être extrait du boîtier et après utilisation être replacé dans le boîtier, **caractérisé en ce que** le boîtier (2) est, entre l'ouverture (6) et l'espace de réception (4) équipé d'une roue entraînée de guidage et de transport (11) de l'élément de fixation (5).

2. Dispositif selon la revendication 1, **caractérisé en ce que** la roue entraînée de guidage et de transport (11) est prévue immédiatement endessous de l'ouverture (6).

3. Dispositif selon la revendication 1 ou 2, **caractérisé en ce que** la roue entraînée de guidage et de transport (11) est mise sous tension par un ressort, et en ce qu'elle tire l'élément de fixation (5) vers l'intérieur du boîtier (2).

4. Dispositif selon la revendication 1 ou 2, **caractérisé en ce qu'**à la roue entraînée de guidage et de transport (11) est fixée une manivelle disposée à l'extérieur du boîtier (2).

5. Dispositif selon l'une des revendications précédentes, **caractérisé en ce que** l'élément de fixation (5) se présente sous la forme d'une chaîne qui présente des membres alternativement horizontaux (5a) et verticaux (5b).

6. Dispositif selon la revendication 5, **caractérisé en ce que** la roue entraînée de guidage et de transport (11) se présente sous la forme d'une roue dentée équipée de plusieurs évidements (13) qui sont chacun disposés entre deux dents (12).

7. Dispositif selon la revendication 6, **caractérisé en ce qu'**un élément de guidage de la chaîne est disposé au-dessus de la roue dentée.

8. Dispositif selon la revendication 7, **caractérisé en ce que** l'élément de guidage se présente sous la forme d'une rainure disposée dans une découpe du boîtier située au-dessus de la roue dentée.

9. Dispositif selon l'une des revendications 5 à 8, **caractérisé en ce que** le boîtier (2) présente pour la chaîne une ouverture (6) en forme de découpe cruciforme.

10. Dispositif selon la revendication 9, **caractérisé en ce qu'**un canal de guidage de la chaîne, en forme de découpe cruciforme, s'étend entre l'ouverture (6) et la roue entraînée de guidage et de transport (11).

11. Dispositif selon l'une des revendications précédentes, **caractérisé en ce que** l'élément de fixation (5) est accroché à son extrémité se trouvant à l'intérieur du boîtier (2) et est muni à son autre extrémité d'une broche de verrouillage (14), et **en ce que** le boîtier (2) présente sur le dispositif de verrouillage (7) un dispositif de reprise (8) dans lequel la broche de verrouillage (14) peut être insérée et accrochée.

12. Dispositif selon l'une des revendications précédentes, **caractérisé en ce que** le boîtier (2) peut être placé de manière indétachable de l'extérieur à une partie (3) d'un véhicule.

13. Dispositif selon l'une des revendications précédentes, **caractérisé en ce que** le boîtier (2) présente des éléments de renfort (15) en forme de bandes, et en particulier de bandes métalliques.

14. Dispositif selon les revendications 11 et 13, **caractérisé en ce que** le dispositif de verrouillage (7) et le dispositif de reprise (8) du dispositif de verrouillage (14) sont disposés sur un des éléments de renfort (15) en forme de bande.

15. Dispositif selon l'une des revendications précédentes, **caractérisé en ce que** le boîtier (2) est fixé de manière non détachable au véhicule par des vis vissables mais non dévissables.

16. Dispositif selon l'une des revendications 1 - 13, dans lequel le dispositif de verrouillage se présente sous la forme d'une serrure dans laquelle s'accroche une des extrémités de l'élément de fixation flexible et dans laquelle l'autre extrémité de l'élément de fixation peut s'accrocher, **caractérisé en ce que** la serrure est fixée de manière non détachable à une partie du véhicule.

17. Dispositif selon la revendication 5, **caractérisé en ce que** la roue entraînée de guidage et de transport (11) présente en alternance un renfoncement (40) s'étendant sur son épaisseur en vue de la reprise des membres horizontaux (5b) de la chaîne et un évidement (41) en vue de la reprise des membres verticaux (5a) de la chaîne.

18. Dispositif selon la revendication 17, **caractérisé en ce que** l'évidement (41) de la roue de guidage et de transport (11) présente sur ses parois latérales des découpes surélevées (42) placées l'une en face de l'autre.

19. Dispositif selon l'une des revendications précédentes, **caractérisé en ce que** sur l'élément flexible de fixation (5) est installé un dispositif d'accrochage qui détermine lors de l'extraction de l'élément de fixation longueur souhaitée d'extraction.

20. Dispositif selon la revendication 19, **caractérisé en ce que** le dispositif d'accrochage consiste en un levier équipé d'un rouleau, qui est disposé et est mis sous tension préalable par un ressort de manière telle que l'extraction de l'élément de fixation hors du boîtier s'effectue librement, et que ce n'est qu'au cours du réengagement de l'élément de fixation dans le boîtier que le dispositif d'accrochage retient l'élément de fixation par l'intermédiaire de l'engagement d'une pince.

21. Dispositif selon la revendication 20, **caractérisé en ce que** le dispositif d'accrochage est libérable de l'engagement de la pince dans l'élément de fixation par l'intermédiaire de l'extraction d'un dispositif d'actionnement disposé à l'extérieur du boîtier.

FIG 1

FIG. 2

11 → 12 13 12

FIG 3

11 12 13

FIG 4

FIG 5